# EUROPÄISCHE PATENTSCHRIFT

(11) **EP 0 494 167 B1**
(45) Veröffentlichungstag und Bekanntmachung des Hinweises auf die Patenterteilung: **12.04.1995**
(21) Anmeldenummer: 90913236.7
(22) Anmeldetag: 13.09.1990
(51) Int. Cl.: F02C 7/20, F01D 15/10

(54) **VERTIKALGASTURBINE**
VERTICAL GAS TURBINE
TURBINE A GAZ VERTICALE

(30) Priorität: 26.09.1989 DE 3932117
(43) Veröffentlichungstag der Anmeldung: 15.07.1992
(73) Patentinhaber: SIEMENS AKTIENGESELLSCHAFT, 80333 München (DE)
(72) Erfinder: MAGHON, Helmut, D-4330 Mülheim/Rhur (DE)
(86) Internationale Anmeldenummer: DE9000705
(87) Internationale Veröffentlichungsnummer: WO9105151

(56) Entgegenhaltungen:
- CH-A- 426 379
- CH-A- 433 868
- FR-A- 1 359 363
- FR-A- 1 385 886
- US-A- 3 187 188
- US-A- 3 199 292

## Beschreibung

Die vorliegende Erfindung betrifft eine stationäre Gasturbine, vorzugsweise mit einer Leistung von mehr als 50 MW und zur Erzeugung von elektrischem Strom, mit einem Gehäuse und mit auf einer Welle angeordnetem Luftverdichterrotor und Turbinenrotor und mit seitlich neben dem Gehäuse angeordneten Brennkammern. Ein solcher Aufbau entspricht dem weltweit angewandten Grundprinzip des Aufbaues von stationären Gasturbinen. Solche Gasturbinen können mit einem in Linie angeordneten Generator direkt gekoppelt werden. Unter einer stationären Gasturbine ist hier nur zu verstehen, daß deren Lage unveränderbar sein soll (im Unterschied z. B. zu einem Flugtriebwerk), während die ganze Anordnung selbst natürlich transportabel sein kann, z. B. auf einem Ponton oder einer Ölbohrinsel.

Seit Jahrzehnten wurde von der Fachwelt die horizontale Anordnung solcher Gasturbinen nicht mehr in Frage gestellt und als einzige Anordnung für im offenen Kreis betriebene große Gasturbinenanlagen betrachtet.

Aus der DE-OS 24 15 447 ist zwar die senkrechte Anordnung einer im geschlossenen Gaskreislauf betriebenen Gasturbine bekannt, jedoch handelt es sich um eine sehr spezielle Anordnung in einem nuklear beneizten Heliumkreislauf. Während in den Anfängen des Gasturbinenbaues bei kleinen Gasturbinen noch vertikale Anordnungen in Betracht gezogen wurden, wurde diese Entwicklungslinie für im offenen Kreislauf betriebene große Gasturbinen später vollständig verlassen.

Aus dem US-Patent 3,187,188 geht eine Gasturbine mit einem auf einer senkrecht stehenden Welle angeordneten Rotor hervor, wobei der Rotor sowohl Strukturen, die als Kompressor fungieren, als auch Strukturen, die als Turbine fungieren, aufweist. Unterhalb der Gasturbine ist ein von der Welle angetriebener Generator angeordnet. Die Leistung der Gasturbine liegt bei Werten unterhalb von 100 kW.

Aus der FR-PS 1 385 886 und der FR-PS 1 359 363 gehen Gasturbinenanordnungen hervor, die jeweils eine Turbine mit einer senkrecht ausgerichteten Welle beinhalten, wobei die Welle einen unterhalb der Turbine angeordneten Generator antreibt. Die Turbine wird beaufschlagt mit Rauchgas aus einer Vielzahl von Gasturbinentriebwerken mit jeweils einer horizontal ausgerichteten Welle, die unterhalb der Turbine im Kreis angeordnet sind.

Aufgabe der Erfindung ist die Angabe einer stationären Gasturbine mit einem Gehäuse sowie darin auf einer Welle angeordnetem Luftverdichterrotor und Turbinenrotor und mit seitlich neben dem Gehäuse angeordneten Brennkammern, bei der die Welle vertikal ausgerichtet und der Turbinenrotor oberhalb des Luftverdichterrotors angeordnet ist, welche so gestaltet ist, daß das gesamte Innere des Gehäuses für eine Wartung leicht zugänglich und günstig positioniert ist. Neben dieser Wartungsfreundlichkeit soll die Gasturbine platzsparend und durch einen symmetrischen Aufbau besonders günstig im Wirkungsgrad sein.

Zur Lösung dieser Aufgabe angegeben wird eine stationäre Gasturbine mit einem Gehäuse sowie darin auf einer Welle angeordnetem Luftverdichterrotor und Turbinenrotor und mit seitlich neben dem Gehäuse angeordneten Brennkammern, bei der die Welle vertikal ausgerichtet und der Turbinenrotor oberhalb des Luftverdichterrotors angeordnet ist, wobei erfindungsgemäß das Gehäuse eine Teilfuge aufweist, die ebenfalls vertikal ausgerichtet ist und das Gehäuse in zwei etwa symmetrische Hälften teilt.

Eine genaue Betrachtung der Konsequenzen dieser Anordnung ergibt überraschenderweise, daß praktisch keine Nachteile entstehen, wohl aber erhebliche Vorteile. Zunächst einmal können Gehäuse und Gasturbine selbst völlig symmetrisch gestaltet werden, was Vorteile bei der Fertigung und auch im Wirkungsgrad hat. Das Gehäuse der Gasturbine ist durch eine etwa vertikal verlaufende Teilfuge in zwei etwa symmetrische Hälften unterteilt, welche seitlich von der Welle weggefahren werden können. Auf diese Weise wird das gesamte Innere des Gehäuses leicht zugänglich und die offenliegende Welle mit Luftverdichterrotor und Turbinenrotor befindet sich direkt in der für eine Wartung günstigsten, nämlich vertikalen Position. Aufwendige Manipulationsvorrichtungen für die Turbinenwelle und der für die zugehörigen Vorrichtungen im Gebäude nötige Raum können eingespart werden. Übernaupt werden insgesamt die statischen Verhältnisse wesentlich günstiger, da Durchbiegungen von Gehäuse oder Welle entfallen. Insbesondere braucht beim Stillstand die Welle auch nicht langsam gedreht zu werden. Hinzu kommt, daß die seitliche Lagerung des Rotors nur geringe Kräfte aufnehmen muß, so daß eine Verkleinerung der Lager möglich wird und/oder ihre Anzahl reduziert werden kann.

Ein entscheidender Vorteil der vertikalen Anordnung ist, daß mehr Spielraum für die Anordnung seitlicher Brennkammern gewonnen wird. Insbesondere brauchen die Brennkammern nicht mehr im Bereicn der Teilfuge des Gehäuses angeflanscht zu werden. Es besteht die Möglichkeit, die Brennkammern auf den Gehäusehälften, vorzugsweise in einer Ebene senkrecht zur Ebene der Teilfuge des Gehäuses anzuordnen. Auf diese Weise können die aus konstruktiven Gründen bei bisherigen Anordnungen problematischen Kreuzfugen vermieden werden.

Auch der Lufteinlaß zum Luftverdichterrotor kann weitestgehend rotationssymmetrisch gestaltet werden. Auch hier ergeben sich neben konstruktiven Vorteilen Wirkungsgradverbesserungen.

Günstig ist bei der vertikalen Anordnung der Gasturbine auch, daß der Auslaß schon relativ hoch liegt, so daß ein darüber angeordneter Kamin entsprechend weniger Bauhöhe haben muß. Außerdem ist keine Umlenkung der Abgase erforderlich, was wiederum für den Wirkungsgrad günstig ist.

Zwar muß das Gewicht von Welle, Luftverdichterrotor und Turbinenrotor im Prinzip von mindestens einem vertikal wirkenden Lager getragen werden, jedoch ist es durch geeignete Dimensionierung der Beschaufelung möglich, den Schub des Turbinenrotors in bestimmten Betriebszuständen, vorzugsweise bei Vollast, größer zu machen als den Gegenschub des Verdichterrotors. Wird der Schub des Turbinenrotors gerade so viel größer gemacht, wie zum Ausgleich des Gewichts der ganzen Welle erforderlich ist, so hebt der Schubüberschuß des Turbinenrotors die ganze Welle an und entlastet das vertikal wirkende Traglager fast vollständig. Die Reibungsverluste in den Lagern werden dadurch insgesamt sehr klein, da die Lager praktisch keine Tragfunktion mehr übernehmen müssen.

Schließlich kann auch die Schall- und Wärmeisolierung der ganzen Anordnung vereinfacht werden, indem eine zusätzliche äußere Schalung angebracht wird, welche vorzugsweise ebenfalls aus zwei auseinanderfahrbaren Hälften besteht.

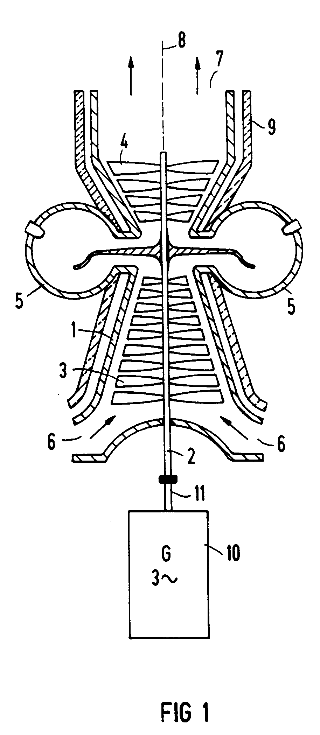

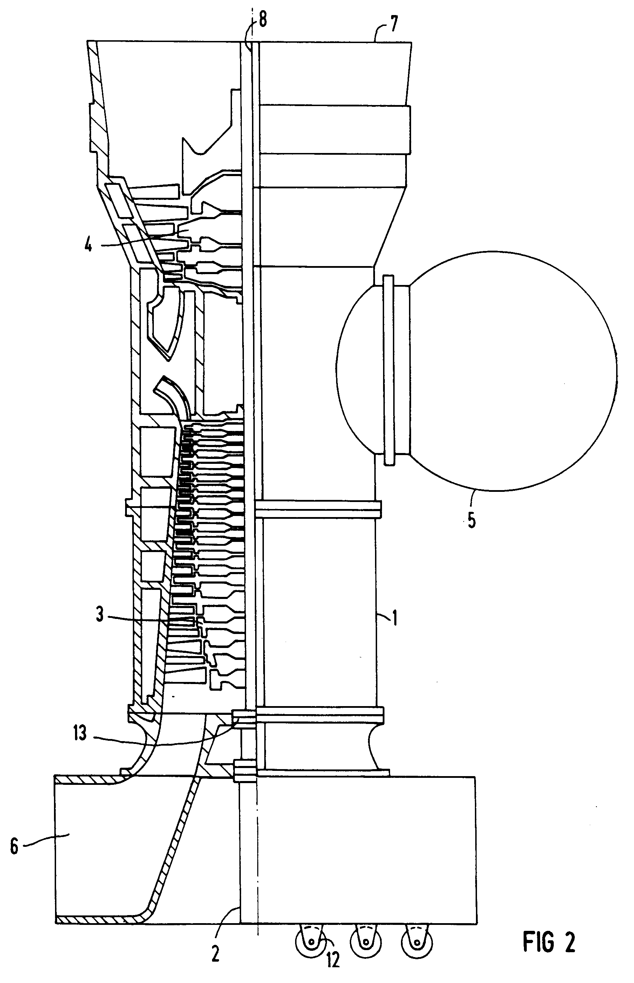

Ein Ausführungsbeispiel der Erfindung ist in der Zeichnung dargestellt, wobei Fig. 1 schematisch das Prinzip und Fig. 2, teilweise im Aufriß, einige Einzelheiten der Anordnung zeigt.

In einem Gehäuse 1 ist eine vertikale Welle 2 angeordnet, welche einen Verdichterrotor 3 und einen Turbinenrotor 4 trägt. Seitlich am Gehäuse sind Brennkammern 5, vorzugsweise zwei, angeordnet. Rotationssymmetrisch angeordnete Lufteinlässe 6 führen dem Verdichterrotor 3 Luft zu, während der Auslaß 7 für die entstehenden Abgase am oberen Ende der Anordnung liegt. Gestrichelt angedeutet ist eine Teilfuge 8 des Gehäuses 1, wobei die Ebene der Teilfuge 8 etwa senkrecht zur Ebene, in der die Brennkammern 5 angeordnet sind, liegt. Das Gehäuse 1 der Gasturbine ist zusätzlich mit einer Isolierschalung 9 umgebn, welche vorzugsweise ebenfalls in Hälften unterteilt und nach außen verfahrbar ist. Mit der Welle 2 der Gasturbine kann die Welle 11 eines Generators 10 direkt gekoppelt sein, wobei der Generator ebenfalls senkrecht steht und unterhalb der Gasturbine angeordnet ist. Durch den Wegfall der bei horizontal angeordneten Gasturbinen notwendigen Tragfunktion des Gehäuses kann dieses ebenfalls konstruktiv günstiger und rotationssymmetrisch gestaltet werden, wobei die Gehäusehälften vorzugsweise auf Rädern, Rollen o. dgl. seitlich verfahrbar sind. Durch Öffnen des Gehäuses werden somit die Leitschaufelträger in beiden Gehäusehälften direkt zugänglich, was einen Ausbau aller Leitschaufeln bei einer Wartung oder Revision vereinfacht.

Die vorliegende Erfindung eignet sich besonders für im offenen Kreislauf betriebene stationäre Gasturbinen, die mit Generatoren einer Leistung von mehr als 50 MW, vorzugsweise mehr als 100 MW, verbunden sind.

## Patentansprüche

1. Stationäre Gasturbine mit einem Gehäuse (1) sowie darin auf einer Welle (2) angeordnetem Luftverdichterrotor (3) und Turbinenrotor (4) und mit seitlich neben dem Gehäuse (1) angeordneten Brennkammern, bei der die Welle (2) vertikal ausgerichtet und der Turbinenrotor (4) oberhalb des Luftverdichterrotors (3) angeordnet ist,
**dadurch gekennzeichnet**, daß das Gehäuse (1) eine Teilfuge (8) aufweist, die ebenfalls vertikal ausgerichtet ist und das Gehäuse (1) in zwei etwa symmetrische Hälften teilt.

2. Stationäre Gasturbine nach Anspruch 1, **dadurch gekenn****zeichnet**, daß unterhalb der Gasturbine ein ebenfalls vertikal stehender Generator (10) angeordnet ist, wobei die Welle (11) des Generators und die Welle (2) der Gasturbine direkt gekuppelt sind.

3. Stationäre Gasturbine nach einem der vorhergehenden Ansprüche, **dadurch gekennzeichnet**, daß die Brennkammern (5) ohne Krümmer, horizontal liegend, direkt neben dem Gehäuse (1) angeordnet und an diesem angeflanscht sind, und zwar außerhalb der Ebene der Teilfuge (8), so daß Kreuzfugen vermieden werden.

4. Stationäre Gasturbine nach einem der vorhergehenden Ansprüche, **dadurch gekennzeichnet**, daß beide Hälften des Gehäuses (1) nach Öffnen der Teilfuge (8) seitlich von der Welle (2) wegbewegbar sind, vorzugsweise auf Rädern (12) o. dgl. verfahrbar.

5. Stationäre Gasturbine nach einem der vorhergehenden Ansprüche, **dadurch gekennzeichnet**, daß der Lufteinlaß (6) zum Luftverdichterrotor (3) weitestgehend rotationssymmetrisch gestaltet ist.

6. Stationäre Gasturbine nach einem der vorhergehenden Ansprüche, **da****durch gekennzeichnet**, daß der Auslaß (7) der Gasturbine ohne Krümmer in einen Kamin übergeht.

7. Stationäre Gasturbine nach einem der vorhergehenden Ansprüche, **dadurch gekennzeichnet**, daß die Beschaufelung so dimensioniert ist, daß der Schub des Turbinenrotors (4) bei Vollast größer als der Gegenschub des Verdichterrotors (3) ist, vorzugsweise etwa soviel größer wie zum Anheben der ganzen Welle (2) erforderlich ist.

8. Stationäre Gasturbine nach einem der vorhergehenden Ansprüche, **dadurch gekennzeichnet**, daß die Welle (2) von mindestens einem vertikal wirkenden Lager (13) getragen wird.

9. Stationäre Gasturbine nach einem der vorhergehenden Ansprüche, **dadurch gekennzeichnet**, daß das ganze Gehäuse (1) von einer zweiten, auseinanderfahrbaren Schalung (9) umgeben ist, die Schall- und Wärmeisolierungseigenschaften hat.

## Claims

1. Stationary gas turbine having a housing (1) and arranged therein on a shaft (2) an air compressor rotor (3) and a turbine rotor (4) and having combustion chambers arranged at the side next to the housing (1), wherein the shaft (2) is vertically aligned and the turbine rotor (4) is arranged above the air compressor rotor (3),
characterised in that the housing (1) has a joint (8) which is likewise vertically aligned and divides the housing (1) into two substantially symmetrical halves.

2. Stationary gas turbine according to claim 1,
characterised in that a likewise vertically upright generator (10) is arranged underneath the gas turbine, with the shaft (11) of the generator and the shaft (2) of the gas turbine being coupled directly.

3. Stationary gas turbine according to one of the preceding claims, characterised in that the combustion chambers (5) are arranged without bends, lying horizontally, directly next to the housing (1) and are flange-mounted thereon outside the plane of the joint (8) so that crossing joints are avoided.

4. Stationary gas turbine according to one of the preceding claims, characterised in that both halves of the housing (1) can be moved laterally away from the shaft (2) after the joint (8) has been opened, preferably being transportable on wheels (12) or the like.

5. Stationary gas turbine according to one of the preceding claims, characterised in that the air inlet (6) to the air compressor rotor (3) is shaped, as far as possible, so as to be rotationally symmetrical.

6. Stationary gas turbine according to one of the preceding claims, characterised in that the outlet (7) of the gas turbine changes over, without bends, into a chimney.

7. Stationary gas turbine according to one of the preceding claims, characterised in that the blading is dimensioned in such a way that the thrust of the turbine rotor (4) in the case of full load is greater than the counter-thrust of the compressor rotor (3), preferably being so much greater as is necessary to lift the whole shaft (2).

8. Stationary gas turbine according to one of the preceding claims, characterised in that the shaft (2) is supported by at least one vertically acting bearing (13).

9. Stationary gas turbine according to one of the preceding claims, characterised in that the whole housing (1) is surrounded by a second casing (9) which can be moved apart and which has sound-insulating and heat-insulating properties.

## Revendications

1. Turbine à gaz industrielle comportant un corps (1) ainsi qu'un rotor (3) de compresseur d'air et un rotor (4) de turbine, montés sur un arbre (2) à l'intérieur du corps, et des chambres de combustion disposées latéralement à côté du corps (1), dans laquelle l'arbre (2) est vertical et le rotor (4) de turbine est au-dessus du rotor (3) du compresseur, caractérisée en ce que le corps (1) comprend un joint (8) de séparation qui est également vertical et qui divise le corps (1) en deux moitiés sensiblement symétriques.

2. Turbine à gaz industrielle suivant la revendication 1, caractérisée en ce qu'une génératrice (10) également verticale est disposée au-dessous de la turbine à gaz, l'arbre (11) de la génératrice et l'arbre (2) de la turbine à gaz étant couplés directement.

3. Turbine à gaz industrielle suivant l'une des revendications précédentes, caractérisée en ce que les chambres (5) de combustion sont disposées horizontalement, sans coude, directement à côté du corps (1) et y sont raccordées par bride, et ce à l'extérieur du plan du joint (8) de séparation, ce qui évite d'avoir des joints qui se croisent.

4. Turbine à gaz industrielle suivant l'une des revendications précédentes, caractérisée en ce que les deux moitiés du corps (1) peuvent être écartées latéralement de l'arbre (2) après ouverture du joint (8) de séparation, et sont amovibles de préférence sur des roues (12) ou analogues.

5. Turbine à gaz industrielle suivant l'une des revendications précédentes, caractérisée en ce que l'entrée (6) pour l'air du rotor (3) du compresseur est agencée de manière à présenter dans une très large mesure une symétrie de révolution.

6. Turbine à gaz industrielle suivant l'une des revendications précédentes, caractérisée en ce que la sortie (7) de la turbine à gaz se prolonge, sans coude, par une cheminée.

7. Turbine à gaz industrielle suivant l'une des revendications précédentes, caractérisée en ce que les aubes ont des dimensions telles que la poussée du rotor (4) de la turbine à pleine charge est supérieure à la contre-poussée du rotor (3) du compresseur, et de préférence est sensiblement nettement supérieure à ce qui est nécessaire pour soulever l'ensemble de l'arbre (2).

8. Turbine à gaz industrielle suivant l'une des revendications précédentes, caractérisée en ce que l'arbre (2) est porté par au moins un palier (13) agissant verticalement.

9. Turbine à gaz industrielle suivant l'une des revendications précédentes, caractérisée en ce que tout le corps (1) est entouré d'une seconde coque (9) pouvant être écartée et qui possède des propriétés d'insonorisation et d'isolation thermique.
